# EUROPÄISCHE PATENTSCHRIFT

(11) **EP 3 904 060 B1**
(45) Veröffentlichungstag und Bekanntmachung des Hinweises auf die Patenterteilung: **12.06.2024**
(21) Anmeldenummer: 21170485.3
(22) Anmeldetag: 26.04.2021
(51) Int. Cl.: B29C 65/22, B29C 65/38

(54) **IMPULSSCHWEISSSCHIENE MIT ANTIHAFT-BELAG**
IMPULSE WELDING RAIL WITH ANTI-ADHESIVE LINING
RAIL DE SOUDAGE PAR IMPULSION POURVU DE REVÊTEMENT ANTIADHÉSIF

(30) Priorität: 28.04.2020 DE 102020111524
(43) Veröffentlichungstag der Anmeldung: 03.11.2021
(73) Patentinhaber: TOSS GmbH & Co. KG Industrieprodukte, 35418 Alten-Buseck (DE)
(72) Erfinder: Toss, Ramon, 35418 Alten-Buseck (DE)
(74) Vertreter: Boult Wade Tennant LLP

(56) Entgegenhaltungen:
- EP-A1- 3 130 448
- WO-A1-2019/165016
- US-A- 3 409 494
- US-A- 3 830 681

## Beschreibung

Die vorliegende Erfindung befasst sich mit einer Impulsschweißschiene nach dem Oberbegriff des Anspruches 1.

Impulsschweißschienen für die Folienverschweißung weisen typische Längen von ca. 200mm bis über 2.500mm auf. Sie müssen mit einem Antihaft-Belag versehen werden, damit sich die verschweißte Naht vom Heizelement lösen kann. Der Antihaft-Belag wird in der Regel seitlich geklebt. Es existieren auch aufwändige mechanische Befestigungen.

Ein typischer Antihaft-Belag ist als PTFE-Glasgewebe ausgebildet, das auf seiner Rückseite partiell selbstklebend ausgeführt ist, so dass es mit der Impulsschweißschiene unmittelbar verklebt werden kann. Im Bereich des Impulsbandes darf kein Kleber vorhanden sein, da dieser ansonsten die Wärmedehnung behindern würde. Da der Antihaft-Belag einem Verschleiß unterliegt, muss er in regelmäßig wiederkehrenden Abständen erneuert werden. Es hat sich dabei gezeigt, dass sich die selbstklebenden Schichten ja nach Alter und Beanspruchung nicht mehr rückstandsfrei von der Impulsschweißschiene entfernen lassen. Bevor dann ein neuer Antihaft-Belag selbstklebend an der Impulsschweißschiene angebracht werden kann, ist es notwendig, die Oberflächen gründlich zu reinigen, was einen erheblichen Zeitaufwand nach sich zieht, der zu verlängerten Stillstandzeiten der Anlage führen kann. Meist ist es auch erforderlich, dass zu Reinigung Lösungsmittel zum Einsatz kommen, was zu den bekannten Problemen aus Umweltgesichtspunkten und der Arbeitsplatzsicherheit führt.

Impulsschweißschienen der eingangs genannten Art sind aus der US 3 830 681 A und der US 3 409 494 A bekannt.

Weitere Impulsschweißschienen sind aus der WO 2019/165016A1 und der EP 3 130 448 A1 bekannt.

Die Aufgabe der Erfindung besteht darin, eine Impulsschweißschiene zu schaffen, die ohne großen konstruktiven Aufwand einen einfacheren und schnelleren Wechsel eines verschlissenen Antihaft-Belages ermöglicht.

Erfindungsgemäß wird die Aufgabe durch eine Impulsschweißschiene mit den Merkmalen des Anspruches 1 gelöst.

Die erfindungsgemäße Impulsschweißschiene bietet den Vorteil, dass sich durch die lösbaren Halteelemente das Verschleißteil mit den zweiten Teilen der Halteelemente schnell und sicher von den mit der Impulsschweißschiene verbundenen ersten Teilen der Haltelemente lösen lässt und ein neuer Antihaft-Belag mit seinen zweiten Teilen der Halteelemente an den an der Impulsschweißschiene verbleibenden ersten Teilen der Halteelemente anbringen lässt. Da zwischen den verschleißenden Antihaft-Belägen einschließlich der zweiten Teile der Halteelemente und der Impulsschweißschiene keinerlei Klebverbindung vorgesehen ist, kann auch sichergestellt werden, dass keine Rückstände eines verschlissenen Antihaft-Belages an der Impulsschweißschiene haften bleiben.

In einer bevorzugten Ausführungsform der Erfindung ist vorgesehen, dass die ersten Teile der Haltelemente an den Flanken der Impulsschweißschiene aufgeklebt sind.

Das Verkleben der ersten Teile der Halteelemente an den Flanken der Impulsschweißschiene ist unproblematisch, da diese auch bei einem Austausch eines verschlissenen Antihaft-Belages an der Impulsschweißschiene verbleiben und daher keine während eines regelmäßigen, verschleißbedingten Austausches des Antihaft-Belages durchzuführenden Reinigungsarbeiten zu besorgen sind.

Eine weitere bevorzugte Ausführungsform der Erfindung sieht vor, dass in den Flanken der Impulsschweißschiene im Bereich der ersten Teile der Halteelemente Vertiefungen vorgesehen sind, die die ersten Teile der Halteelemente ganz oder teilweise aufnehmen.

Die Vertiefungen können zweckmäßig sein, wenn die ersten Teile der Haltelemente eine gewissen Bauraum benötigen, so dass diese in den Vertiefungen wenigstens teilweise versenkt werden können, um nicht seitlich zu sehr über die Flanken der Impulsschweißschiene überzustehen. Ein weiterer Vorteil ist, dass die Vertiefungen die exakte Position für die ersten Teile der Halteelemente vorgeben, so dass diese bei der Montage ohne weitere Maßnahmen exakt positioniert werden können und dadurch auch die korrekte Ausrichtung des Antihaft-Belages relativ zu der Impulsschweißschiene über die an ihm vorgesehenen zweiten Teile der Halteelemente ohne weiteres ermöglicht ist.

Eine einfache Ausführungsform der Erfindung kann vorsehen, dass die Halteelemente als Druckfederknöpfe ausgebildet sind. Bei dieser Lösung sind an jeder Flanke der Impulsschweißschiene wenigstens zwei Druckknöpfe vorgesehen, wie man sie von Bekleidungsstücken kennt, um eine exakte Positionierung des Antihaft-Belages zu ermöglichen. Als Nachteil dieser Lösung ist die hohe Präzision zu nennen, mit denen die Druckknopfteile angebracht werden müssen. Stimmen die Abstände der Mutter- bzw. Vaterteile nicht exakt überein, wird die Montage erschwert, oder es entstehen Falten im Belag. Dabei ist außerdem die unterschiedliche Wärmedehnung von Schienengrundkörper und PTFE-Belag zu berücksichtigen. Der metallische Grundkörper kann sich im Betrieb erwärmen und dehnen. Das PTFE-Glasgewebe dehnt sich hingegen kaum. Spannungen zwischen beiden sind die Folge. Insbesondere bei langen Schienen tritt der Effekt merklich in Erscheinung.

Alternativ zu den Druckknöpfen kann vorgesehen sein, dass die Halteelemente als Klettverschlüsse ausgebildet sind. Klettverschlüsse sind einfach zu bedienen und die zugehörigen Teile lassen sich leicht flächig mit den Flanken der Impulsschweißschiene und dem Antihaft-Belag verbinden. Allerdings ist ohne weitere Maßnahmen keine exakte Ausrichtung der beiden Teile der Halteelemente und damit des Antihaft-Belages relativ zu der Impulsschweißschiene möglich, da bei dieser Lösung keine genaue Vorgabe der Position auf der Schiene gegeben ist. Wie auch bei der üblichen Verklebung, muss der Bediener den Belag sehr genau zur Montage ausrichten. Immerhin würde die Problematik mit Kleber-Rückständen vermieden.

Besonders bevorzugt ist daher eine Ausführungsform der Erfindung, bei welcher die Halteelemente als Druckverschlussleisten ausgebildet sind.

Es hat sich gezeigt, dass Druckverschlussleisten, die von wiederverschließbaren Beuteln aus dem Bereich Verpackungen eigentlich für ein luftdichtes Verschließen solcher Beutel bekannt sind, auch geeignet sind, den Antihaft-Belag in lösbarer und austauschbarer Art und Weise passgenau und mit hinreichenden Haltekräften auf der Impulsschweißschiene zu befestigen. Es ist auch ohne weiteres möglich, die jeweiligen Teile der Druckverschlussleisten, bei denen es sich um hakenartige, kleine Kunststoffprofile handelt, die miteinander verhaken und durch die Verformbarkeit des Kunststoffmaterials lösbar sind, an flächigen Elementen anzuordnen, die dann im Fall der ersten Teile der Haltelemente mit den Flanken der Impulsschweißschiene und im Fall der zweiten Teile der Haltelemente mit dem Antihaft-Belag verklebt sein können. Die beiden Teile der Druckverschlussleisten lassen sich leicht lösen, um einen verschlissenen Antihaft-Belag zu entfernen und mit den zweiten Teilen eines neuen Antihaft-Belages zu verbinden.

In einer noch weiteren, besonders bevorzugten Ausführungsform der Erfindung ist vorgesehen, die ersten Teile der Druckverschlussleisten in Nuten in den Flanken der Impulsschweißschiene anzuordnen. Diese Nuten bilden im Falle von Druckverschlussleisten die bereits weiter oben angesprochenen Vertiefungen. Dadurch werden die ersten Teile ausgerichtet und können zu einem wesentlichen Teil ihres Querschnittes in der Schiene versenkt werden.

Vorzugsweise sind die zweiten Teile der Druckverschlussleisten an den Rändern des Antihaft-Belages angebracht, der die Impulsschweißschiene überspannt. Wie bereits erwähnt kann dies in der Weise erfolgen, dass die Leisten mit dem Antihaft-Belag über seitliche Flächenelemente flächig verklebt sind

In an sich bekannter Weise kann der Antihaft-Belag durch ein beschichtetes Fasergewebe gebildet sein, das eine ausreichende mechanische Festigkeit besitzt, um den im Betrieb auftretenden mechanischen Beanspruchungen zu wiederstehen. Typischerweise kommen Glas- oder Aramidfasern als Gewebematerial zum Einsatz.

Die eigentliche Antihaftwirkung wird typischerweise dadurch erreicht, dass das Fasergewebe mit PTFE beschichtet oder laminiert ist.

In der überwiegenden Zahl der Anwendungsfälle werden PTFE-Glasgewebe eingesetzt. Die Qualitäten unterscheiden sich im Wesentlichen in der Gewebequalität und Beschichtungsstärke (g/m²) mit PTFE. Es existieren auch PTFE-Glasgewebe mit zusätzlicher Graphit-Füllung (Antistatik-Ausrüstung), oder funktionslosen Einfärbungen. Seltener kommen anstelle auch Polyimid-Folien (Handelsname Kapton) zum Einsatz. Sie besitzen eine höhere Temperaturbeständigkeit, was für wenige Applikationen benötigt wird. Auch existieren Qualitäten mit Polyimid-Folie als Trägermaterial und PTFE als zusätzlicher Antihaft-Schicht.

In einer bevorzugten weiteren Ausführungsform der Erfindung ist vorgesehen, dass die Impulsschweißschiene an Ihrer Oberseite einen hitzebeständigen Bereich aufweist, über den ein Impulsschweißband verläuft.

Im Regelfall wird die für das Verschweißen erforderliche Wärme in einem von elektrischem Strom durchflossenen Impulsschweißband erzeugt, das baulich getrennt von der Impulsschweißschiene an deren Oberseite angeordnet ist. Um die Impulsschiene selbst vor übermäßigem Wärmeeintrag zu schützen, ist der hitzebeständige Bereich vorgesehen, der im einfachsten Fall einstückig mit der Impulsschweißschiene selbst ausgebildet ist, die z.B. als Strangpressprofil hergestellt ist.

Da der durch die Hitze des Impulsschweißbandes beanspruchte Bereich einem Verschleiß unterliegen kann, ist vorzugsweise vorgesehen, dass die Impulsschweißschiene (10) an Ihrer Oberseite eine Haltenut (16) zur Aufnahme einer hitzebeständigen Auflage (17) aufweist, die den hitzebeständigen Bereich bildet. Diese kann aus unterschiedlichen Materialien bestehen, z.B. aus einem Metallprofil. Die Materialauswahl richtet sich nach den Beanspruchungen, wie vorstehend erwähnt, kann die Auflage auch einstückig mit der Schiene ausgebildet sein, um einen Tausch mit der aufwändigen Entfernung von Kleberesten zu vermeiden, wobei ggf. im Verschleißfall die Schiene getauscht werden muss. Je nach Prozess kann dies dennoch vorteilhaft sein.

Besonders bevorzugt ist jedoch eine Ausführungsform der Erfindung, bei welcher die hitzebeständige Auflage (17) aus einem Silikongummi-Material besteht, das sich als besonders geeignet erwiesen hat, den Wärmeeintrag in die Schiene zu reduzieren.

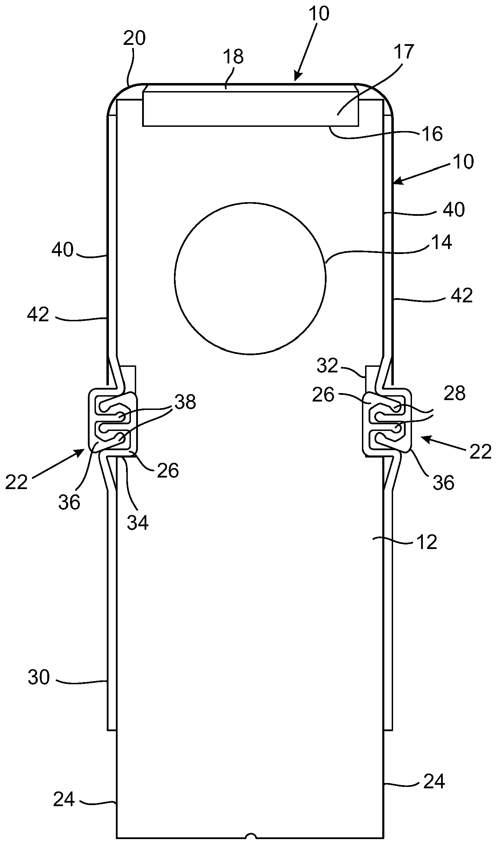

Nachfolgend wird anhand der beigefügten Zeichnung näher auf ein Ausführungsbeispiel der Erfindung eingegangen. Die Abbildung zeigt einen Querschnitt einer Impulsschweißschiene mit einem Antihaft-Belag mit erfindungsgemäßen Halteelementen.

In der beigefügten Zeichnung ist eine Impulsschweißschiene 10 gezeigt, die aus einem im Querschnitt im Wesentlichen rechteckigen Grundkörper 12 aus Metall, in der Regel Aluminium oder Stahl, besteht und eine auf den jeweiligen Anwendungszweck abgestimmte Länge aufweist. Die Impulsschweißschiene 10 kann mit einem kreisförmigen Kanal 14 ausgeführt sein, der nach Bedarf die Flüssigkeitskühlung zur Wärmeabfuhr erlaubt.

An ihrer Oberseite ist die Impulsschweißschiene 10 mit einer Haltenut 16 zur Aufnahme einer hitzebeständigen Auflage17 als Isolierung versehen, die z.B. aus Silikongummi-Material bestehen kann. Über dieser Auflage verläuft ein Impuls-Heizband 18 über die gesamte Länge der Impulsschweißschiene 10, das die zum Verschweißen der Folien (nicht gezeigt) erforderliche Wärme dadurch erzeugt, dass es von Strom durchflossen wird. Elektrische Anschlüsse (nicht gezeigt) hierzu befinden sich an den Enden der Impulsschweißschiene 10 und sind in an sich bekannter Weise ausgeführt. Das Heizband 18 ist in der Regel deutlich schmaler ausgeführt als die hitzebeständige Auflage 17.

Um einen direkten Kontakt zwischen dem Impulsband und der zu verschweißenden Folie sicher zu verhindern, ist ein Antihaft-Belag 20 vorgesehen, der hier als streifenförmiges PTFE-Glasfasergewebe ausbildet ist. Das PTFE-Glasfasergewebe überspannt das Heizband 18 und ist an seinen seitlichen Rändern 42 über Halteelemente 22 in Form von Druckverschlussleisten an seitlichen Flanken 24 der Impulsschweißschiene 10 lösbar befestigt. Das Halteprinzip dieser Druckverschlussleisten ist von wiederverschließbaren Folienbeuteln bekannt, wird hier aber nicht als luftundurchlässiger Verschluss sondern zur lösbaren, exakt positionierten Anbringung des PTFE-Glasfasergewebes auf der Impulsschweißschiene 10 eingesetzt.

Die Druckverschlussleisten 22 sind zweiteilig ausgebildet, wobei das Grundprinzip aus miteinander verzahnenden, im Querschnitt hakenförmig ausgebildeten Kunststoffprofilen 24 besteht, die hier jeweils paarweise angeordnet sind. Das Lösen ist durch die Verformbarkeit der Kunststoffprofil gegeben, wenn die Druckverschlussleiste auf starken Zug beansprucht wird.

Wie erwähnt sind die beiden Druckverschlussleisten 22 jeweils zweiteilig ausgebildet, wobei ein erstes Teil 26 der Impulsschweißschiene 10 zugeordnet ist. Das zugehörige erste Paar 28 hakenförmiger Kunststoffprofile ist mit einem ersten Flächenelement 30 verbunden oder einstückig ausgeformt, das mit den Flanken 24 der Impulsschweißschiene 10 flächig verklebt ist. Das Kunststoffmaterial ist so gewählt, dass es der auftretenden Wärmebelastung und mechanischen Beanspruchung dauerhaft standhält, gleiches gilt für den zum Einsatz kommenden Klebstoff.

Das erste Paar 28 Kunststoffprofile liegt jeweils in Vertiefungen in Form einer Nut 32 in dem Körper 12 der Impulsschweißschiene 10, deren untere Ränder 34 die Positionen der ersten Teile 26 der Druckverschlussleisten 22 vorgeben.

Nach dem Eindrücken zweiter Teile 36 der Druckverschlussleisten 22, die wiederum aus Paaren 38 von hakenförmigen Kunststoffprofilen bestehen, die in ihrer Form den ersten Paaren 28 entsprechen und beim Verschließen mit diesen formschlüssig verhaken, ist dann der Antihaft-Belag 20 ebenfalls exakt positioniert.

Die zweiten Paare 28 hakenförmiger Kunststoffprofile sind mit zweiten Flächenelementen 40 verbunden oder einstückig ausgeformt, die mit Rändern 42 des Antihaft-Belages 20 flächig verklebt sind. Auch hier ist das Kunststoffmaterial so gewählt, dass es der auftretenden Wärmebelastung und mechanischen Beanspruchung dauerhaft standhält, gleiches gilt natürlich auch hier für den zum Einsatz kommenden Klebstoff.

Zum Austausch eines verschlissenen Antihaft-Belages 20 werden dessen Ränder kräftig auf Zug weg von den Flanken 24 der Impulsschweißschiene 10 beansprucht, so dass sich die hakenförmigen Kunststoffprofile verformen und Formschluss zwischen den Teilen 26, 36 der Druckverschlussleisten 22 aufgehoben wird. Der Antihaft-Belag 20, der nur über die Druckverschlussleisten 22 gehalten war, lässt sich rückstandsfrei abheben.

Anschließend kann einfach ein neuer Antihaft-Belag 20 montiert werden, indem dessen zweite Paare 38 aus hakenförmigen Kunststoffprofilen durch Eindrücken formschlüssig mit den fest an der Impulsschweißschiene angebrachten ersten Paaren 28 aus hakenförmigen Kunststoffprofilen verhakt werden. Es ist eine Eigenschaft von Druckverschlussleisten dieser Art, dass Ihre Lösekraft deutlich über der Schließkraft liegt, so dass sich ein sicherer Halt des Antihaft-Belages 20 im Betrieb der Impulsschweißschiene 10 ergibt.

In Querrichtung geben die Druckverschlussprofile die Position des Antihaft-Belags genau vor, eine manuelle Ausrichtung entfällt. In Längsrichtung verhindert die Reibung zwischen den Profilen ein Verrutschen während der Nutzung.

### Bezugszeichenliste

- 10: Impulsschweißschiene
- 12: Grundkörper
- 14: Hohlraum
- 16: Haltenut
- 17: Auflage
- 18: Heizband
- 20: Antihaft-Belag
- 22: Halteelemente/Druckverschlussleisten
- 24: Flanken der Impulsschweißschien
- 26: Erste Teile der Halteelemente
- 28: erste hakenförmige Kunststoffprofilpaare
- 30: erstes Flächenelement
- 32: Vertiefungen / Nuten
- 34: Untere Ränder der Nuten
- 36: Zweite Teile der Halteelemente
- 38: Zweite hakenförmige Kunststoffprofilpaare
- 40: Zweite Flächenelemente
- 42: Ränder des Antihaft-Belages

## Patentansprüche

1. Impulsschweißschiene für die Verschweißung von Kunststofffolien mit einem lösbaren Antihaft-Belag (20), der an seitlichen Flanken (24) der Impulsschweißschiene (10) gehalten ist, wobei zur lösbaren Befestigung des Antihaft-Belages (20) an beiden Flanken (24) der Impulsschweißschiene (10) formschlüssig wirkende zwei- oder mehrteilige Halteelemente (22) vorgesehen sind, wobei erste Teile (26) der Halteelemente (22) an den Flanken (24) der Impulsschweißschiene (10) und zweite Teile (36) der Halteelemente (22) an dem Antihaft-Belag (20) angeordnet sind **dadurch gekennzeichnet, dass** die Halteelemente als Druckfederknöpfe, als Klettverschlüsse oder als Druckverschlussleisten ausgebildet sind.

2. Impulsschweißschiene nach Anspruch 1, **dadurch gekennzeichnet, dass** die ersten Teile (26) der Haltelemente (22) an den Flanken (24) der Impulsschweißschiene (10) aufgeklebt sind.

3. Impulsschweißschiene nach Anspruch 1 oder 2, **dadurch gekennzeichnet, dass** in den Flanken (24) der Impulsschweißschiene (10) Vertiefungen (32) vorgesehen sind, die die ersten Teile (26) der Halteelemente (22) ganz oder teilweise aufnehmen.

4. Impulsschweißschiene nach einem der Ansprüche 1 bis 3, **dadurch gekennzeichnet, dass** die ersten Teile (26) der Druckverschlussleisten (22) in Nuten (32) in den Flanken (24) der Impulsschweißschiene (10) liegen.

5. Impulsschweißschiene nach einem der vorhergehenden Ansprüche, **dadurch gekennzeichnet, dass** die zweiten Teile (36) der Druckverschlussleisten (22) an den Rändern des Antihaft-Belages (20) angebracht sind, der die Impulsschweißschiene (10) überspannt.

6. Impulsschweißschiene nach einem der vorhergehenden Ansprüche, **dadurch gekennzeichnet, dass** der Antihaft-Belag (20) durch ein beschichtetes Fasergewebe gebildet ist.

7. Impulsschweißschiene nach Anspruch 6, **dadurch gekennzeichnet, dass** das Fasergewebe mit PTFE beschichtet oder laminiert ist.

8. Impulsschweißschiene nach einem der vorhergehenden Ansprüche, **dadurch gekennzeichnet, dass** die Impulsschweißschiene (10) an Ihrer Oberseite einen hitzebeständigen Bereich aufweist, über den ein Impuls-Heizband (18) verläuft.

9. Impulsschweißschiene nach Anspruch 8, **dadurch gekennzeichnet, dass** die Impulsschweißschiene (10) an Ihrer Oberseite eine Haltenut (16) zur Aufnahme einer hitzebeständigen Auflage (17) aufweist, die den hitzebeständigen Bereich bildet.

10. Impulsschweißschiene nach Anspruch 9, **dadurch gekennzeichnet, dass** die hitzebeständige Auflage (17) aus einem Silikongummi-Material besteht

## Claims

1. Impulse welding rail for the welding of plastic films having a detachable anti-stick coating (20), which is held at lateral flanks (24) of the impulse welding rail (10), wherein for the detachable fastening of the anti-stick coating (20) at both flanks (24) of the impulse welding rail (10) two-part or multi-part holding elements (22) are provided which act in a form-fitting manner, wherein first part (26) of the holding elements (22) are arranged at the flanks (24) of the impulse welding rail (10) and second parts (36) of the holding elements (22) are arranged at the anti-stick coating (20), **characterised in that** the holding element are in the form of compression spring elements, hook and loop fasteners or pressure closure strips.

2. Impulse welding rail according to claim 1, **characterised in that** the first parts (26) of the holding elements (22) are adhesively bonded to the flanks (24) of the impulse welding rail (10).

3. Impulse welding rail according to claim 1 or 2, **characterised in that** in the flanks (24) of the impulse welding rail (10) indentations (32) are provided which accommodate the first parts (26) of the holding elements (22) entirely or partially.

4. Impulse welding rail according to any of claims 1 to 3, **characterised in that** the first part (26) of the pressure closure strips (22) lie in grooves (32) in the flanks (24) of the impulse welding rail (10).

5. Impulse welding rail according to any of the preceding claims, **characterised in that** the second parts (36) of the pressure closure strips (22) are mounted to the edges of the anti-stick coating (20) which spans the impulse welding rail (10).

6. Impulse welding rail according to any of the preceding claims, **characterised in that** the anti-stick coating (20) is formed by a coated fiber fabric.

7. Impulse welding rail according to claim 6, **characterised in that** the fiber fabric is coated or laminated with PTFE.

8. Impulse welding rail according to any of the preceding claims, **characterised in that** the impulse welding rail (10) has on its upper side a heat-resistant region across which an impulse heating strip (18) extends.

9. Impulse welding rail according to claim 8, **characterised in that** the impulse welding rail (10) has on its upper side a holding groove (16) for the reception of a heat-resistant overlay (17) which forms the heat-resistant region.

10. Impulse welding rail according to claim 9, **characterised in that** the heat-resistant overlay (17) consists of a silicon-rubber material.

## Revendications

1. Rail de soudage par impulsion pour souder des films plastiques avec un revêtement antiadhésif (20) amovible, qui est maintenu sur les flancs latéraux (24) du rail de soudage par impulsion (10), dans lequel des éléments de maintien (22) à action positive en deux parties ou en plusieurs parties sont prévus pour fixer de manière amovible le revêtement antiadhésif (20) aux deux des flancs (24) du rail de soudage par impulsion (10), dans lequel de premières parties (26) des éléments de maintien (22) sont disposées sur les flancs (24) du rail de soudage par impulsion (10) et de secondes parties (36) des éléments de maintien (22) sont disposées sur le revêtement antiadhésif (20), **caractérisé en ce que** les éléments de maintien sont conçus en tant que boutons à ressort de pression, fermetures autoagrippantes ou bandes de fermeture à pression.

2. Rail de soudage par impulsion selon la revendication 1, **caractérisé en ce que** les premières parties (26) des éléments de maintien (22) sont collées sur les flancs (24) du rail de soudage par impulsion (10).

3. Rail de soudage par impulsion selon la revendication 1 ou 2, **caractérisé en ce que** des évidements (32) sont prévus dans les flancs (24) du rail de soudage par impulsion (10), qui reçoivent entièrement ou partiellement les premières parties (26) des éléments de maintien (22).

4. Rail de soudage par impulsion selon l'une quelconque des revendications 1 à 3, **caractérisé en ce que** les premières parties (26) des bandes de fermeture à pression (22) se situent dans des rainures (32) dans les flancs (24) du rail de soudage par impulsion (10).

5. Rail de soudage par impulsion selon l'une quelconque des revendications précédentes, **caractérisé en ce que** les secondes parties (36) des bandes de fermeture à pression (22) sont placées sur les bords du revêtement antiadhésif (20) qui enjambe le rail de soudage par impulsion (10).

6. Rail de soudage par impulsion selon l'une quelconque des revendications précédentes, **caractérisé en ce que** le revêtement antiadhésif (20) est formé par un tissu fibreux revêtu.

7. Rail de soudage par impulsion selon la revendication 6, **caractérisé en ce que** le tissu fibreux est revêtu ou laminé de PTFE.

8. Rail de soudage par impulsion selon l'une quelconque des revendications précédentes, **caractérisé en ce que** le rail de soudage par impulsion (10) présente sur son côté supérieur une zone résistante à la chaleur sur laquelle une bande chauffante par impulsion (18) s'étend.

9. Rail de soudage par impulsion selon la revendication 8, **caractérisé en ce que** le rail de soudage par impulsion (10) présente sur son côté supérieur une rainure de maintien (16) pour recevoir une surface d'appui résistante à la chaleur (17) qui forme la zone résistante à la chaleur.

10. Rail de soudage par impulsion selon la revendication 9, **caractérisé en ce que** la surface d'appui résistante à la chaleur (17) est constituée d'un matériau en caoutchouc silicone.
